# EUROPÄISCHE PATENTSCHRIFT

(11) **EP 1 931 753 B1**
(45) Veröffentlichungstag und Bekanntmachung des Hinweises auf die Patenterteilung: **20.05.2015**
(21) Anmeldenummer: 06754429.6
(22) Anmeldetag: 19.06.2006
(51) Int. Cl.: C10J 3/00, C10J 3/78, B09B 3/00, C05F 3/00, C02F 11/04, C05G 1/00, C02F 11/08, C10L 3/08, C10L 5/44

(54) **VERFAHREN ZUR ERZEUGUNG VON METHAN UND/ODER METHANHYDRAT AUS BIOMASSE**
PROCESS FOR GENERATING METHANE AND/OR METHANE HYDRATE FROM BIOMASS
PROCEDE POUR PRODUIRE DU METHANE ET/OU DE L'HYDRATE DE METHANE A PARTIR DE BIOMASSE

(30) Priorität: 04.10.2005 EP 05021601
(43) Veröffentlichungstag der Anmeldung: 18.06.2008
(73) Patentinhaber: Paul Scherrer Institut, 5232 Villigen PSI (CH)
(72) Erfinder: VOGEL, Frédéric, CH-5018 Erlinsbach (CH); WALDNER, Maurice, CH-5400 Baden (CH); TRUONG, Thanh-Binh, CH-5033 Buchs (CH); DE BONI, Erich, CH-5400 Baden (CH); STUCKI, Samuel, CH-5415 Nussbaumen (CH)
(74) Vertreter: Fischer, Michael
(86) Internationale Anmeldenummer: PCT/EP2006/005837
(87) Internationale Veröffentlichungsnummer: WO 2007/038996

(56) Entgegenhaltungen:
- EP-A- 1 632 550
- EP-A2- 1 002 767
- WO-A-96/30464
- DE-A1- 3 133 670
- DE-A1- 19 634 111
- US-A- 4 113 446
- US-A- 5 630 854

## Beschreibung

Die vorliegende Erfindung betrifft ein Verfahren zur Erzeugung von Methan und/oder Methanhydrat aus Biomasse. Ein ähnliches Verfahren wird in US-A-5 630 854 offenbart.

Unter dem Begriff "Biomasse" ist pflanzliches oder tierisches Material zu verstehen. Beispielhaft können Holz, Mist, Gülle, Stroh, Gras, Algen, Klärschlamm und Schlachtabfälle genannt werden.

Allerdings sollte sich das Verfahren auch für andere Stoffe mit organischen Anteilen eignen wie: Kunststoffabfälle, Abwässer, Kehricht, Altreifen, Altpapier, Altöle, organische Lösungsmittel, fossile Biomasse (Torf, Kohle, Erdöl).

In einer kürzlich vom Bundesamt für Energie (BFE, Schweiz) in Auftrag gegebenen Studie der Hochschule Wädenswil, "Scheurer, K.; Baier, U. Biogene Güter in der Schweiz. Massen- und Energieflüsse. Hochschule Wädenswil, im Auftrag des BFE, Programm Biomasse, Schlussbericht, Februar 2001", wird auf das grosse, weitgehend ungenutzte energetische Potential von Gülle hingewiesen. Der gesamte Hofdüngeranfall (Mist + Gülle) betrug 1998/99 2.283 Mio t TS (Trockensubstanz), was einem Energieinhalt von 37 PJ entspricht. Die Vergärung von 4'700 t TS Hofdünger lieferte 1998 rund 48 TJ an Energie in Form von Biogas, was nur ca. 0.1% des gesamten Energiepotentials im Hofdünger darstellt. Bei der Vergärung fallen zudem grössere Mengen nicht vergärbaren Feststoffs an. Holzartige Biomasse kann praktisch nicht vergärt werden.

Im Folgendem bezeichnet der Begriff "hydrothermal" ein wässriges System unter Druck und erhöhter Temperatur, typischerweise in der Nähe oder über dem kritischen Punkt von Wasser (374°C, 221 bar). Nahekritisches und überkritisches Wasser bilden ein interessantes Reaktionsmedium, um chemische Reaktionen durchzuführen. Insbesondere eignet sich dieses Medium für die Hydrolyse und die Umsetzung von Biomasse zu flüssigen und gasförmigen Produkten. Da der Übergang eines flüssigen Systems unter Druck ins Überkritische keinen echten Phasenübergang darstellt, muss für das in der Biomasse enthaltene Wasser keine Verdampfungsenthalpie aufgewendet werden, was im Gegensatz zu Gasphasenprozessen (z.B. atmosphärische Vergasung nasser Biomasse) steht. Daher haben hydrothermale Prozesse das Potential für hohe thermische Wirkungsgrade.

Die meist bevorzugte Reaktion für die Umwandlung von Biomasse zu Methan kann beispielhaft für Holz mit folgender Stöchiometrie beschrieben werden:

CH_{1.52}O_{0.64} (s) + 0.3 H₂O(g) → 0.53 CH₄(g) + 0.47 CO₂(g) (1)

Unter normalen Bedingungen (geringer Wasser-Partialdruck) verläuft die Umsetzung von Biomasse mit Wasser nicht bzw. nicht vollständig nach Gl. (1), sondern es entstehen Nebenprodukte wie z.B. Teere oder fester Kohlenstoff (Koks). Gelingt es, die Reaktionsbedingungen so zu wählen, dass Reaktion (1) vollständig abläuft, kann ein hoher thermischer Wirkungsgrad erwartet werden, da die Reaktion (1) leicht exotherm ist. Der theoretisch maximal mögliche Wirkungsgrad beträgt 95% (bezogen auf den unteren Heizwert Hᵤ des Holzes). Eine von der Anmelderin durchgeführte Systemanalyse für einen kommerziellen Prozess ergab einen erzielbaren Wirkungsgrad im Bereich von 70-80% für Holz. Dieses wurde ausführlich in der Literaturstelle "Vogel, F., and F. Hildebrand, Catalytic Hydrothermal Gasification of Woody Biomass at High Feed Concentrations. Chem. Eng. Trans. 2, 2002, 771-777" beschrieben. Dies ist deutlich höher als der Wirkungsgrad anderer Verfahren zur Umwandlung von Holz zu Methan.

Zusammengefasst bleiben die derzeit bekannten Prozesse zur Methanerzeugung aus Biomasse jedoch hinsichtlich der erreichbaren Wirkungsgrade hinter den theoretischen Erwartungen zurück, so dass sie derzeit nicht wirtschaftlich eingesetzt werden können.

Der vorliegenden Erfindung liegt daher die Aufgabe zugrunde, ein Verfahren zur:Erzeugung von Methan aus Biomasse anzugeben, bei dem unter hydrothermalen Bedingungen ein hoher Wirkungsgrad erzielbar ist, der den Anforderungen an einen wirtschaftlichen Einsatz genügen würde.

Diese Aufgabe wird erfindungsgemäss durch die im Patentanspruch 1 angegebenen Massnahmen gelöst. Vorteilhafte Ausgestaltungen der Erfindung sind in weiteren Ansprüchen angegeben.

Das erfindungsgemässe Verfahren zur Erzeugung von Methan aus Biomasse weist die nachfolgenden Verfahrensschritte auf:
a) aus der Biomasse wird ein Biomassebrei unter Einstellung eines optimalen Trockenmasseanteils hergestellt,
b) der Biomassebrei wird unter Druck gesetzt,
c) zur Verflüssigung der festen organischen Bestandteile des Biomassebreis wird der Biomassebrei unter Druck erhitzt,
d) der so unter Druck gesetzte und erhitzte Biomassebrei wird weiter auf mindestens die der Mischung eigene kritische Temperatur erhitzt,
e) unter Druck und erhöhter Temperatur werden dabei ausgefällte Feststoffe von der fluiden Phase abgetrennt, und
f) mittels eines katalytischen Reaktors wird unter Druck und erhöhter Temperatur mindestens ein Teil der fluiden Phase zu einem methanreichen Gas vergast.

Auf diese Weise wird ein Verfahren geschaffen, welches einen sehr hohen Wirkungsgrad aufweist, weil ein Grossteil der die katalytische Vergasung störenden Stoffe, im besonderen Salze, durch Ausfällung unter überkritischen Bedingungen von der Mischung abgetrennt werden können. Auf diese Weise kann für die katalytische Vergasung eine hohe Ausbeute an Methan und eine hohe Reaktionsrate bei gleichzeitig hoher Standzeit des Katalysators erzielt werden.

In einer ersten Weiterbildung der Erfindung kann das unter Druck stehende methanreiche Gas nach der katalytischen Vergasung von der restlichen Flüssigkeitsphase abgetrennt werden. Eine nachfolgende Abkühlung des unter Druck stehenden methanreichen Gases führt zu einer Bildung von festem Methanhydrat, welches dann von den übrigen Gaskomponenten, insbesondere CO₂ und/oder Kohlenmonoxid und Wasserstoff, abgetrennt werden kann. Das so entstandene Methanhydrat weist dabei eine annähernde Zusammensetzung zu 8 CH₄ x 46 H₂O auf. Damit kann das Methan kostengünstig bei ca. -15°C und 1 bar einfach in Form eines Feststoffes gelagert und transportiert werden. Da sich Methan bevorzugt in ein Hydratgitter einlagert, kann der Prozessschritt vorteilhafterweise ebenfalls dazu benutzt werden, Methan von CO₂ und von restlichen Gaskomponenten, wie Kohlenmonoxid, Wasserstoff oder höheren Kohlenwasserstoffen zu trennen. Um das Methan als reines Gas zu erhalten, kann das Methanhydrat erhitzt werden, was aufgrund seiner Zersetzung zu CH₄ und H₂O führt.

In einer zweiten Weiterbildung der Erfindung kann das bei der katalytischen Vergasung erzeugte Methangas aus dem unter Druck stehenden methanreichen Gas, vorzugsweise unter Ausnutzung des Druckes, mittels eines Waschkölonne-, Membrantrennung- oder Adsorberverfahrens von übrigen Gaskomponenten, insbesondere CO₂ und/oder Kohlenmonoxid und/oder Wasserstoff, abgetrennt werden. Bei diesem Verfahrensschritt kann das Methan in einem geeigneten Apparat (z.B. Waschkolonne, Membrantrennung, Adsorber) von den anderen Komponenten, vorzugsweise CO₂ und Kohlenmonoxid, aus der Gasphase abgetrennt werden und steht dann unter hohem Druck (200-400 bar) zur Verfügung. Dadurch entfällt vorteilhafterweise ein Kompressiomsschritt, um das Methan z.B. in Gasflaschen anzufüllen, als Treibstoff an einer Gastankstelle anzubieten oder ins Erdgasnetz einzuspeisen. Es ist ebenfalls denkbar, das komprimierte Gas direkt als Brennstoff in einem Gasturbinenprozess zu nutzen.

So können sich die folgenden Vorteile zusätzlich ergeben:
i) bei dem Verfahrensschritt a) kann die Biomasse vorzugsweise durch Nassmahlung unter Einstellung eines gewünschten Trockenmasseanteils konditioniert werden. Der Trockenmasseanteil kann dabei u.a. durch Wasserzufuhr oder -abfuhr zwischen 5 und 50 Massenprozent, vorzugsweise etwa im Bereich von 15 bis 30 Massenprozent, eingestellt werden;
ii) zur Verbesserung der Pumpfähigkeit können der Biomasse andere Zusatzstoffe, wie z.B. Stärke oder Altöle, zugegeben werden;
iii) in dem Verfahrensschritt b) wird der konditionierte. Biomassebrei auf hohen Druck im Bereich von 200 bis 400 bar gebracht und kann dabei je nach Vorgehensweise kontinuierlich oder stossweise gefördert werden. Hierfür können übliche Extruder, Hochdruck-Exzenterschneckenpumpen, Kolbenmembranpumpen und/oder Feststoffpumpen verwendet werden.
   Anschliessend wird der Biomassebrei unter Druck auf ca. 200 bis 350°C erhitzt, so dass sich die festen organischen Bestandteile des Biomassebreis weitgehend verflüssigen;
iv) zur besseren Erhitzung und Verflüssigung gemäss dem Vorteil nach Schritt iii) können ebenfalls statische Mischelemente und/oder ein Katalysator wie z.B. Kaliumcarbonat, Natriumcarbonat, Kaliumhydroxid, Natriumhydroxid oder Zinkoxid verwendet werden; auch die Zugabe von Säuren (z.B. Schwefelsäure) zur Verbesserung der Verflüssigung ist denkbar.
v) bei dem Verfahrensschritt d) übersteigt die Temperatur in vorteilhafter Weise die kritische Temperatur der jeweiligen Mischung, die zum Beispiel für reines Wasser bei 221 bar 374°C beträgt. Durch Überschreiten des kritischen Punktes der Mischung wird eine starke Abnahme der Löslichkeit von Salzen und anderen anorganischen Stoffen erreicht.
vi) Dabei kann dieses höhere Temperaturniveau vorzugsweise wie folgt erreicht werden:
   - durch einen externen Wärmeeintrag, z.B. über Wärmetauscher mit einem Brenner/katalytischen Brenner, der mit zurückgeführtem Produktgas gespiesen wird, oder
   - durch Zugabe von geeigneten Oxidationsmitteln in den kalten oder auch teilerhitzten Biomassebrei, wie z.B. Sauerstoff, Luft, Wasserstoffperoxid, Ammonium- und andere Nitrate, so dass eine partielle Oxidation der organischen Bestandteile des Biomassebreis stattfindet. Diese Oxidationsreaktionen sind exotherm und generieren vorzugsweise genügend Wärme, um den Biomassebrei auf die gewünschte Temperatur zu bringen.
   - durch Kombinationen der ersten beiden Verfahren.
vii) die gesammelten Ausfällungen, insbesondere der meisten Salze, sowie die restlichen Feststoffe können aus dem Prozess kontinuierlich oder periodisch effektiv ausgetragen werden.
viii) Feststoffe, wie eben die vorstehend genannten Salze, werden vor der katalytischen Vergasung im verwendeten Reaktor unter überkritischen Bedingungen ausgefällt, abgetrennt und zurückgewonnen. Die an den Elementen N, P und K reichen Salze eignen sich beispielsweise hervorragend als Grundlage zur Herstellung von in der Landwirtschaft verwendbaren Düngern. Damit würde sich auch diesbezüglich der ökologische Stoffkreislauf schliessen.
ix) bei der katalytische Vergasung wird der Reaktor mit einem Katalysator derart beschickt, dass eine Vergasung hauptsächlich zu Kohlendioxid, Methan, und Wasserstoff stattfindet. Dabei können Spuren von Kohlenmonoxid sowie höheren Kohlenwasserstoffen, wie Ethan, Propan, gebildet werden.
   Vorzugsweise weist der Katalysator einen hohen Nickelanteil auf, wie z.B. Raney® Nickel, mit Anteilen von einem oder mehreren Elementen Ruthenium, Molybdän, Chrom und/oder Kupfer.
x) der Reaktor wird vorzugsweise als Wirbelschichtreaktor, als Monolithreaktor, als Wandreaktor oder als Rohrreaktor ausgestaltet, wobei zugehörige Rohre oder Rohrbündel mit dem Katalysator beschichtet werden. Alternativ können die Rohre des Reaktors auch mit katalytisch beschichteten Blechen gefüllt sein. Festbettreaktoren sind ebenfalls denkbar, aber infolge der höheren Verstopfungsgefahr weniger vorteilhaft.

Die Erfindung wird nachfolgend anhand der Zeichnung für die Vergasung von Biomasse (z.B. Holz oder Gülle-Feststoff) näher erläutert. Dabei zeigen:
- Figur 1: ein Grundfliessbild für die katalytische hydrothermale Vergasung von Biomasse nach einer ersten Ausgestaltung der Erfindung, und
- Figur 2: ein Grundfliessbild für die katalytische hydrothermale Vergasung von Biomasse nach einer zweiten Ausgestaltung der Erfindung.

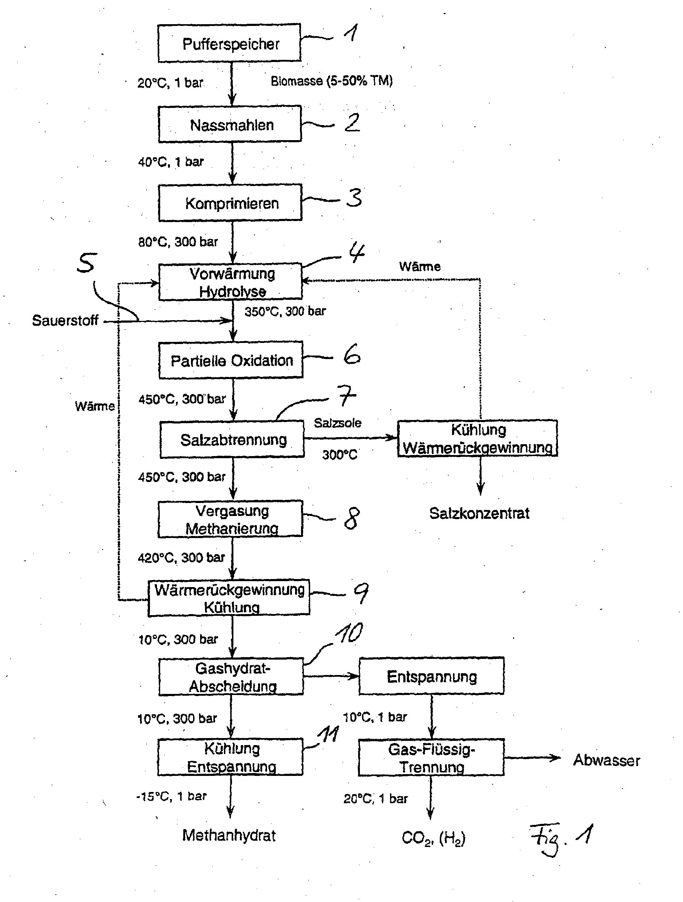

Figur 1 zeigt ein Grundfliessbild der katalytischen hydrothermalen Vergasung von Biomasse. Dabei ist eine autotherme Fahrweise durch Zugabe von Sauerstoff oder eine allotherme Variante (ohne Sauerstoffzugabe, mit externem Wärmeeintrag) möglich. Die Überhitzung auf Temperaturen von 400°C bis 500°C wird bei der letztgenannten Option durch das Verbrennen von einem Teil des Produktgases und durch indirekten Wärmeaustausch realisiert.

Folgende Prozessschritte werden im Folgenden durchlaufen:
- Step 1:: Bildung eines Pufferspeichers zur Aufnahme der Biomasse unter Einstellung eines TM-Gehalts von 5 bis 50 Massenprozent (TM = Trockenmasse) bei ca. 20°C und 1 bar,
- Step 2: Nassmahlung der Mischung bei 40°C und 1 bar,
- Step 3: Komprimierung der nassgemahlenen Mischung bei 80°C und 300 bar,
- Step 4: Vorwärmung (Hydrolyse) bei 300°C und 300 bar,
- Step 5: optionale Zugabe von Sauerstoff (oder eines anderen Oxidationsmittels),
- Step 6: Durchführung einer partiellen Oxidation bei einer überkritischen Temperatur der Mischung bei vorliegend etwa 450°C und 300 bar,
- Step 7: Durchführung einer Salzabtrennung, Kühlung und Abzug einer Salzsole bei etwa 300°C, was zu einem vergleichsweise sauberen Salzkonzentrat führt, wobei zur Wärmerückgewinnung die Abwärme wieder zu dem vorherigen Vorwärmungsschritt (Step 4) zurückgeführt werden kann,
- Step 8: Vergasung und Methanierung zum eigentlichen methanreichen Produktgas bei etwa 420°C und etwa 300 bar,
- Step 9: Abkühlung des nun methanreichen Gasgemisches auf etwa 10°C und immer noch etwa 300 bar, wobei auch hier ein grosser Teil der in diesem Schritt anfallenden Abwärme wieder in den vorgehenden Vorwärmungsschritt (Step 4) zurückgeführt werden kann,
- Step 10: Abscheidung und Trennung des festen Gashydrats von der restlichen Gas- und Flüssigphase unter Druck bei ca. 10°C und 300 bar. Entspannung der restlichen Gas- und Flüssigphase auf 1 bar und Abtrennung der Gasvon der Flüssigphase.
- Step 11: Gewinnung des festen Methanhydrats durch weitere Abkühlung auf etwa -15°C und weitere Entspannung auf Umgebungsdruck.

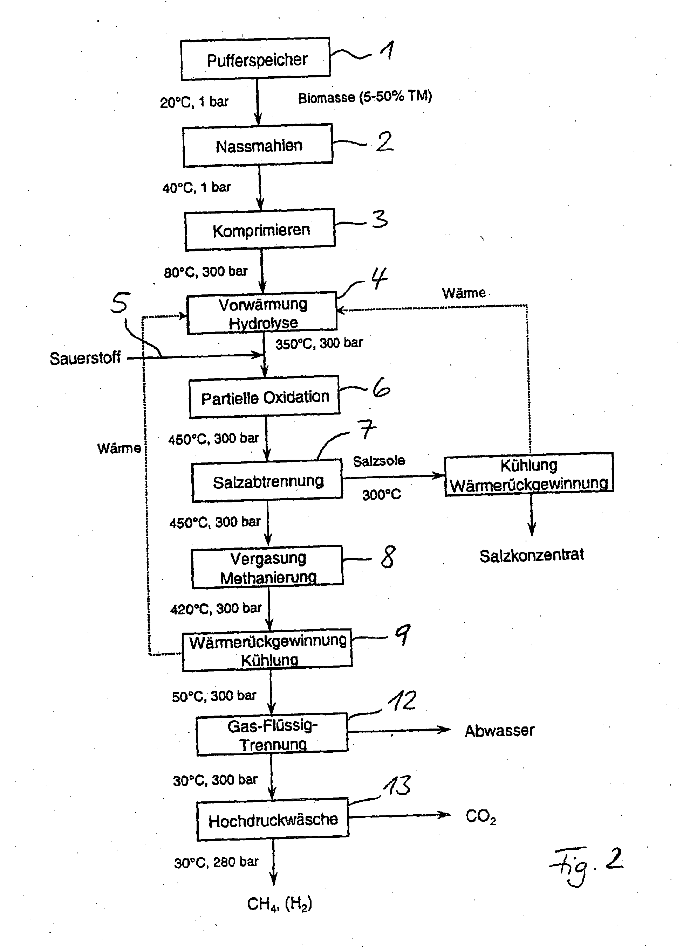

Zusätzlich für das Ausführungsbeispiel gemäss Figur 2 sind die folgenden Verfahrensschritte nötig.
- Step 9: Abkühlung des nun methanreichen Gasgemisches auf etwa 50°C und immer noch etwa 300 bar, wobei auch hier ein grosser. Teil der in diesem Schritt anfallenden Abwärme wieder in den vorgehenden Vorwärmungsschritt (Step 4) zurückgeführt werden kann,
- Step 12: Durchführung einer Gas-Flüssig-Trennung bei 50°C und ca. 300 bar, bei der weitgehend sauberes Wasser zurückgewonnen wird, und
- Step 13: Gas-Trennung z. B. durch eine Hochdruckwäsche bei etwa 30°C und 280 bar, bei der das Methan CH₄ von den weiteren Gaskomponenten, wie zum Beispiel CO₂ und Wasserstoff, abgetrennt und gesammelt wird,

Bei diesem Gesamtprozess wird also ein festes Methanhydrat aus Biomasse mit einem TM-Gehalt von 5 bis 50 Massenprozent (TM = Trockenmasse) erzeugt. Anfänglich wird die Biomasse nass gemahlen und mittels einer Schlammpumpe bei ca. 300 bar in einen Reaktor gefördert. Dabei wird die Suspension auf ca. 300°C vorgeheizt, was zur Hydrolyse und Aufspaltung der Biopolymere (Cellulose, Lignin, Proteine) führt. Vor oder eigentlichen katalytischen Vergasung und Methanierung wird ein Sauerstoffstrom (öder ein anderes Oxidationsmittel) zugeführt. Dadurch findet eine partielle Oxidation der organischen Bestandteile statt, was genügend Wärme freisetzt, um zur gewünschten Reaktionstemperatur von 400-500°C zu gelangen (autotherme Fahrweise). Beim Eintritt ins überkritische Gebiet (ca. 402°C bei 300 bar für reines Wasser) fallen die meisten Salze als Feststoffe aus. Dadurch lässt sich eine Abtrennung der Salze vor dem Katalysatorbett erreichen. Nach der katalytischen Reformierung der hydrolysierten Biomasse-Bestandteile zu CH₄, CO₂ und dem Nebenprodukt H₂ wird das Wasser-Gas-Gemisch unter Druck gekühlt und ein Teil der frei werdenden Wärme für die Vorwärmung der noch nicht vergasten Stoffe eingesetzt. Die Kühltemperatur von ca. 10°C bei 300 bar ist so gewählt, dass die Methanhydrat-Bildung stattfindet, aber das übrige Wasser nicht gefriert. In einem Abscheider kann das feste Methanhydrat von der restlichen Flüssig- und Gasphase abgetrennt werden. Um das bei Umgebungsdruck metastabile Methanhydrat zu gewinnen, muss dieses vor der Entspannung auf mindestens ca. -15°C abgekühlt werden. Vorzugsweise wurde das Methanhydrat vorher von restlichem Haftwasser getrennt.

Das in Figur 2 gezeigte Verfahren unterscheidet sich von dem in Figur 1 gezeigten Verfahren erst ab dem Verfahrensschritt 9. Die Abkühlung erfolgt nur bis auf eine Temperatur von 25-50°C. In diesem Bereich entsteht kein Methanhydrat, sondern die Gase liegen gelöst in der wässrigen Phase vor. Anstelle der Bildung von festem Methanhydrat ist im Schritt 12 die Trennung von flüssiger und gasförmiger Phase unter Ausnutzung des hohen Druckes von immer noch etwa 300 bar sowie im nachfolgenden Schritt 13 die Abtrennung von Kohlendioxid in einem Hochdruckwäscher vorgesehen. Hierdurch liegt das Methan in diesem Verfahren als gasförmiges, unter einem hohen Druck stehendes Gas vor.

Es ist auch möglich, statt Schritt 13 das Gas zu entspannen und mittels bekannter Trennverfahren (Druckwechseladsorption, Gaswäsche) in CH₄/H₂ und CO₂ zu trennen. Allerdings steht dann das Methangas nicht unter hohem Druck zur Verfügung.

Aufgrund dieser Vorgehensweise werden mit den erfindungsgemässen Verfahren eine ganze Reihe von Vorteilen gegenüber dem Stand der Technik erzielt:
- Die Umsetzung der Biomasse erfolgt in und mit Wasser. Feuchte oder nasse Biomasse braucht nicht getrocknet zu werden. Dadurch kann ein höherer energetischer Wirkungsgrad des Verfahrens erreicht werden.
- Die Biomasse wird in einer **1. Prozessstufe** konditioniert, d.h. zerkleinert und auf den gewünschten Trockenmassenanteil (TM) gebracht, vorzugsweise durch Nassmahlung. Dadurch entsteht ein pumpfähiger Brei. Zur Verbesserung der Pumpfähigkeit können der Biomasse andere Zusatzstoffe (z.B. Stärke, Altöle) zugegeben werden. Der erwünschte Trockenmassenanteil beträgt 5 bis 80 Massenprozent, vorzugsweise etwa 15 bis 40 Massenprozent. Das Verfahren arbeitet besonders wirtschaftlich, wenn der organische Trockenmassenanteil etwa 20 Massenprozent und mehr beträgt.
- Der konditionierte Biomassebrei wird in einer **2. Prozessstufe** auf hohen Druck (200-400 bar) gebracht und kontinuierlich oder stossweise gefördert. Als Förderaggregate eignen sich insbesondere Extruder, Hochdruck-Exzenterschneckenpumpen, Kolbenmembranpumpen, und Feststoffpumpen.
- In einer **3. Prozesstufe** wird der Biomassebrei unter Druck auf 200-350°C erhitzt. Dabei verflüssigen sich die festen organischen Biomassebestandteile weitgehend. Zur besseren Erhitzung und Verflüssigung kann diese Prozessstufe statische Mischelemente und/oder einen Katalysator (z.B. Zinkoxid) enthalten.
- In einer **4. Prozessstufe** wird der unter Druck stehende, erhitzte und verflüssigte Biomassebrei in einem geeigneten Apparat (z.B. Zyklon, MODAR-Abscheider, Filter) schnell auf ein noch höheres Temperaturniveau gebracht, vorzugsweise im Bereich oder über der kritischen Temperatur der jeweiligen Mischung. Als Anhaltspunkt dient hier die kritische Temperatur von Wasser bei 374°C und 221 bar. Dies kann durch externen Wärmeeintrag (z.B. durch einen Brenner/katalytischen Brenner, der mit zurückgeführtem Produktgas gespiesen wird) oder durch Zugabe von geeigneten Oxidationsmitteln (z.B. Sauerstoff, Luft, Wasserstoffperoxid, Ammonium- und andere Nitrate) direkt in die 4. Prozessstufe (oder eine der vorangehenden Prozessstufen 1-3) geschehen. Dadurch fallen die meisten Salze und restlichen Feststoffe aus und können gesammelt werden. Als Variante werden die gesammelten Ausfällungen kontinuierlich oder periodisch aus dem Prozess ausgetragen. Das Abtrennen und Zurückgewinnen von Feststoffen als Salze vor dem katalytischen Vergasungsreaktor unter hydrothermalen Bedingungen sowie die mögliche Zugabe von salzartigen Oxidationsmitteln. (Nitrate, z.B. Ammoniumnitrat) zur partiellen Oxidation der Biomasse unter hydrothermalen Bedingungen verbessern die Durchführung und erhöhen die Effizienz des Verfahrens wesentlich. Die abgezogenen Feststoffe sind aufgrund der Beschaffenheit der Ausgangsstoffe sehr reich an Stickstoff-, Phosphor- und Kaliumsalzen und eignen sich daher hervorragend zur Weiterverwendung als Dünger für die Landwirtschaft.
- In einer **5. Prozessstufe** gelangt der heisse Biomassestrom, nunmehr von den meisten Feststoffen befreit, in einen mit einem geeigneten Katalysator beschickten Reaktor, wo die Vergasung zu Methan, Kohlendioxid, Wasserstoff und Spuren von Kohlenmonoxid sowie höheren Kohlenwasserstoffen (Ethan, Propan) stattfindet. Der Katalysator weist dabei vorzugsweise einen hohen Nickelanteil (z.B. Raney® Nickel) auf und kann weiter auch noch Anteile von Ruthenium, Chrom und/oder Kupfer aufweisen. Andere Katalysatoren, die auf Ni, Ru, oder Rh als aktives Metall basieren, sind ebenfalls einsetzbar. Der Reaktor wird vorzugsweise als wirbelschichtreaktor, als Monolithreaktor oder als Wandreaktor (mit Katalysator beschichtetes Rohr oder Rohrbündel) ausgestaltet. Es könnten aber auch Rohre verwendet werden, in welche katalytisch beschichtete Bleche eingesetzt sind.
- In einer **6. Prozessstufe (A)** wird der Produktstrom gemäss dem ersten vorstehend beschriebenen Flussdiagramm unter Druck (200 bis 400 bar) auf etwa 50°C abgekühlt und in einem geeigneten Apparat auf 0 bis 20°C nachgekühlt. Dabei bildet sich festes Wasser-Methan-Clathrat (oder Methanhydrat). Dieser weisse Feststoff hat die ungefähre Zusammensetzung 8 CH₄ x 46 H₂O. Damit kann Methan kostengünstig bei ca. -15°C und 1 atm als Feststoff transportiert werden. Dieser Prozessschritt kann ebenfalls dazu benutzt werden, Methan vom CO₂ und den restlichen Gaskomponenten zu trennen.

Die so beschriebene Herstellung von Methanhydrat aus Biomasse sowie die Bildung von Methanhydrat zur vereinfachten Abtrennung des Methans weist einen hohen Wirkungsgrad auf.
- Alternativ zur vorstehend beschriebenen 6. Prozessstufe (A) kann gemäss dem zweiten vorstehend beschriebenen Flussdiagramm eine **6. Prozessstufe (B)** gewählt werden, in der der Produktstrom auf ca. 50°C gekühlt und die Gasphase unter Druck von der Flüssigphase getrennt wird. In einem geeigneten Apparat (z.B. Waschkolonne, Membrantrennung, Adsorber) kann das Methan von den anderen Komponenten aus der Gasphase abgetrennt werden und steht dann unter hohem Druck (ca. 200 bis 400 bar) zur Verfügung. Dadurch entfällt ein Kompressionsschritt, um das Methan in Gasflaschen abzufüllen, als Treibstoff an einer Gastankstelle anzubieten oder ins Erdgasnetz einzuspeisen. Es ist ebenfalls denkbar, das komprimierte Gas direkt als Brennstoff in einem Gasturbinenprozess zu nutzen.

Hiernach bietet das Bereitstellen von Methan aus Biomasse unter einem für Erdgastankstellen und/oder für die Einspeisung ins Erdgasnetz, für die Abfüllung in Flaschen, oder die Verwendung als Brennstoff in Gasturbinen geeigneten Druck gemäss diesem zweiten Verfahren eine starke wirtschaftliche Verwertbarkeit.

## Patentansprüche

1. Verfahren zur Erzeugung von Methan aus Biomasse, welches die nachfolgenden Verfahrensschritte aufweist:
a) aus der Biomasse wird ein Biomassebrei unter Einstellung eines gewünschten Trockenmasseanteils hergestellt,
b) der Biomassebrei wird unter Druck gesetzt,
c) zur Verflüssigung der festen organischen Bestandteile des Biomassebreis wird der Biomassebrei unter Druck erhitzt,
d) der so unter Druck gesetzte und erhitzte Biomassebrei wird weiter auf mindestens die der Mischung eigene kritische Temperatur erhitzt,
e) unter Druck und erhöhter Temperatur werden dabei ausgefällte Feststoffe von der fluiden Phase abgetrennt, und
f) mittels eines katalytischen Reaktors wird unter Druck und erhöhter Temperatur mindestens ein Teil der restlichen fluiden Phase zu einem methanreichen Gas vergast.

2. Verfahren nach Anspruch 1,
**dadurch gekennzeichnet, dass**
das unter Druck stehende methanreiche Gas von der restlichen Flüssigkeitsphase abgetrennt wird.

3. Verfahren nach Anspruch 1 oder 2,
**dadurch gekennzeichnet, dass**
das methanreiche Gas unter Druck abgekühlt wird und das sich hierbei bildende feste Methanhydrat von den übrigen Gaskomponenten, insbesondere CO₂ und/oder Kohlenmonoxid und Wasserstoff, sowie vorzugsweise von dem Restwasser getrennt wird.

4. Verfahren nach Anspruch 3,
**dadurch gekennzeichnet, dass**
das bei der Vergasung erzeugte Methan aus dem unter Druck stehenden methanreichen Gas, vorzugsweise unter Ausnutzung des Druckes, mittels eines Waschkolonne-, Membrantrennung- oder Adsorberverfahrens von übrigen Gaskomponenten, insbesondere CO₂ und/oder Kohlenmonoxid und/oder Wasserstoff, abgetrennt wird.

5. Verfahren nach einem der voranstehenden Ansprüche,
**dadurch gekennzeichnet, dass**
in dem Verfahrenschritt a) die Biomasse durch Nassmahlung zerkleinert und unter Wasserzufuhr oder Wasserabtrennung auf einen Trockenmasseanteil zwischen 5 bis 80 Massenprozent, vorzugsweise 15 bis 40 Massenprozent, eingestellt wird.

6. Verfahren nach Anspruch 5,
**dadurch gekennzeichnet, dass**
zur Verbesserung der Pumpfähigkeit des Biomassebreis weitere Zusatzstoffe, insbesondere Stärke oder Altöle, zugegeben werden.

7. Verfahren nach einem der voranstehenden Ansprüche,
**dadurch gekennzeichnet, dass**
in dem Verfahrensschritt b) der Biomassebrei auf einen Druck im Bereich von 200 bis 400 bar gebracht wird.

8. Verfahren nach Anspruch 7,
**dadurch gekennzeichnet, dass**
der Biomassebrei nach dem Verfahrensschritt b) unter Druck auf 200 bis 400°C, vorzugsweise auf 250 bis 350°C, erhitzt wird.

9. Verfahren nach Anspruch 8,
**dadurch gekennzeichnet, dass**
zur besseren Erhitzung und Verflüssigung statische Mischelemente und/oder ein Katalysator, wie z.B. Zinkoxid, verwendet werden.

10. Verfahren nach einem der voranstehenden Ansprüche,
**dadurch gekennzeichnet, dass**
in dem Verfahrenschritt d) das höhere Temperaturniveau mindestens auf der der Mischung eigenen kritischen Temperatur liegt.

11. Verfahren nach Anspruch 10,
**dadurch gekennzeichnet, dass**
das höhere Temperaturniveau erreicht wird:
- durch einen externen Wärmeeintrag, z.B. über einen Wärmetauscher mit einem Brenner/katalytischen Brenner, der mit zurückgeführtem Produktgas gespiesen wird,
oder
- durch Zugabe von geeigneten Oxidationsmitteln, wie z.B. Sauerstoff, Luft, Wasserstoffperoxid, Ammonium- und andere Nitrate, sodass eine partielle Oxidation des Biomassebreis eintritt.

12. Verfahren nach Anspruch 10 oder 11,
**dadurch gekennzeichnet, dass**
Salze und restliche Feststoffe ausfallen und gesammelt werden, wobei die gesammelten Ausfällungen kontinuierlich oder periodisch vor der Vergasung aus dem Prozess ausgetragen werden.

13. verfahren nach einem der voranstehenden Ansprüche,
**dadurch gekennzeichnet, dass**
in dem Verfahrensschritt f) ein Katalysator zur schnelleren Einstellung der gewünschten Produktgaszusammensetzung eingesetzt wird.

14. Verfahren nach Anspruch 13,
**dadurch gekennzeichnet, dass**
der Katalysator als aktives Metall Nickel, Ruthenium oder Rhodium enthält.

15. Verfahren nach einem der Ansprüche 13 oder 14,
**dadurch gekennzeichnet, dass**
der katalytische Reaktor vorzugsweise als Wirbelschichtreaktor, als Monolithreaktor, als Wandreaktor oder als Rohrreaktor ausgestaltet wird, wobei zugehörige Rohre oder Rohrbündel mit dem Katalysator beschichtet werden oder in ein Rohr geschichtete katalytisch beschichtete Platten verwendet werden.

16. Verfahren nach einem der vorangehenden Ansprüche,
**dadurch gekennzeichnet, dass**
die katalytische Vergasung unter überkritischen Bedingungen ausgeführt wird.

## Claims

1. Method for generating methane from biomass, comprising the process steps of:
a) a pulp of biomass is generated out of the biomass thereby establishing a requested amount of dry matter,
b) the pulp of biomass is set under pressure,
c) the pulp of biomass is heated under pressure in order to liquefy solid organic components of the pulp of biomass,
d) the pulp of biomass, thus, being put under pressure and heated is further heated at least to the critical temperature of the pulp of biomass,
e) under pressure and elevated temperature precipitated solid matters are thereby separated from the fluid phase, and
f) by means of a catalytic reactor at least one part of the remaining fluid phase is turned to a methane-rich gas under pressure and elevated temperature.

2. Method according to claim 1,
**characterized in that**
the methane-rich gas, being under pressure, is separated from the remaining fluid phase.

3. Method according to claim 1 or 2,
**characterized in that**
the methane-rich gas is cooled down under pressure and the thereby forming solid methane hydrate is separated from the remaining gas components, in particular CO₂ and/or carbon monoxide and hydrogen as well as preferably from the residual water.

4. Method according to claim 3,
**characterized in that**
the methane, generated through gasification, is separated from the pressurized methane-rich gas preferably by utilizing the pressure by means of a washer unit or by means of a membrane separator or by means of an adsorber method of remaining gas components, in particular CO₂ and/or carbon monoxide and/or hydrogen.

5. Method according to one of the preceding claims
**characterized in that**
in the process step a) the biomass is reduced by wet grinding and adjusted under water supply or water removal to an amount of dry matter between a weight percent of 5 to 80, preferably between 15 to 40 weight percent.

6. Method according to claim 5,
**characterized in that**
further additives, starch and waste oil in particular, are added for the purpose of improving the pumpability of the pulp of biomass.

7. Method according to one of the preceding claims,
**characterized in that**
in the process step b) the pulp of biomass is put to a pressure in the range from 200 to 400 bar.

8. Method according to claim 7,
**characterized in that**
the pulp of biomass according to the process step b) is heated under pressure to 200 to 400°C, preferably from 250 to 350°C.

9. Method according to claim 8,
**characterized in that**
static mixing elements and/or catalysts, e.g. zinc oxide, are used for an improved heating and liquefaction.

10. Method according to one of the preceding claims,
**characterized in that**
in the process step d) the higher temperature level lies at least in the own critical temperature of the mixture.

11. Method according to claim 10,
**characterized in that**
the higher temperature level is reached:
- by means of an external heat input, e.g. over a heat exchanger with a burner/catalytic burner, supplied with recycled product gas,
or
- by adding suitable oxidants, e.g. oxygen, air, hydrogen peroxide, ammonium and other nitrates so that a partial oxidation of the pulp of biomass eventuates.

12. Method according to claim 10 or 11,
**characterized in that**
salts and remaining solids are precipitated and collected, whereby collected precipitations are continuously or periodically carried out of the process prior to the gasification.

13. Method according to one of the preceding paragraphs,
**characterized in that**
in the process step f) a catalyst is deployed for a faster adjustment of the desired product gas composition.

14. Method according to claim 13,
**characterized in that**
the catalyst comprises nickel, ruthenium or rhodium as an active metal.

15. Method according to one of the claims 13 or 14,
**characterized in that**
the catalytic reactor is preferably designed as an turbulent fluidised bed reactor, as a monolith reactor, as a wall reactor or as a tube reactor, whereby related pipes or bundles of catalyst coated plats are disposed in the tube reactor.

16. Method according to one of the preceding claims,
**characterized in that**
the catalytic gasification is implemented under hypercritical conditions.

## Revendications

1. Procédé pour la production de méthane à partir d'une biomasse, qui présente les étapes de procédé suivantes:
a) à partir de la biomasse, on prépare une pâte de biomasse en réglant une proportion de masse sèche souhaitée,
b) la pâte de biomasse est mise sous pression,
c) la pâte de biomasse est chauffée sous pression pour liquéfier les constituants organiques solides de la pâte de biomasse,
d) la pâte de biomasse ainsi mise sous pression et chauffée est chauffée davantage à au moins la température critique propre au mélange,
e) les solides qui précipitent sont séparés sous pression et température augmentée de la phase fluide et
f) au moins une partie de la phase fluide résiduelle est gazéifiée en un gaz riche en méthane au moyen d'un réacteur catalytique, sous pression et température augmentée.

2. Procédé selon la revendication 1, **caractérisé en ce que** le gaz riche en méthane sous pression est séparé de la phase liquide résiduelle.

3. Procédé selon la revendication 1 ou 2, **caractérisé en ce que** le gaz riche en méthane est refroidi sous pression et l'hydrate de méthane solide qui se forme est séparé des autres composants gazeux, en particulier du CO₂ et/ou du monoxyde de carbone et de l'hydrogène, ainsi que de préférence de l'eau résiduelle.

4. Procédé selon la revendication 3, **caractérisé en ce que** le méthane produit lors de la gazéification est séparé du gaz riche en méthane sous pression, de préférence en exploitant la pression, au moyen d'un procédé par colonne de lavage, par séparation sur membrane ou par adsorbant, des autres composants gazeux, en particulier du CO₂ et/ou du monoxyde de carbone et/ou de l'hydrogène.

5. Procédé selon l'une quelconque des revendications précédentes, **caractérisé en ce que**, dans l'étape de procédé a), la biomasse est broyée par broyage humide et réglée à une proportion de masse sèche, avec apport d'eau ou séparation d'eau, entre 5 à 80% en masse, de préférence entre 15 à 40% en masse.

6. Procédé selon la revendication 5, **caractérisé en ce que**, pour améliorer l'aptitude au pompage de la pâte de biomasse, d'autres additifs, en particulier de l'amidon ou des huiles usagées, sont ajoutés.

7. Procédé selon l'une quelconque des revendications précédentes, **caractérisé en ce que**, dans l'étape de procédé b), la pâte de biomasse est amenée à une pression dans la plage de 200 à 400 bars.

8. Procédé selon la revendication 7, **caractérisé en ce que** la pâte de biomasse est chauffée, après l'étape de procédé b), sous pression à 200 jusqu'à 400°C, de préférence à 250 jusqu'à 350°C.

9. Procédé selon la revendication 8, **caractérisé en ce que**, pour un meilleur chauffage et une meilleure liquéfaction, des éléments de mélange statiques et/ou un catalyseur, tel que par exemple de l'oxyde de zinc, sont utilisés.

10. Procédé selon l'une quelconque des revendications précédentes, **caractérisé en ce que**, dans l'étape de procédé d), le niveau de température supérieure se situe au moins à la température critique propre au mélange.

11. Procédé selon la revendication 10, **caractérisé en ce que** le niveau de température supérieure est atteint:
- par une introduction de chaleur externe, par exemple via un échangeur thermique équipé d'un brûleur/brûleur catalytique, qui est alimenté en gaz produit recyclé ou
- par addition d'oxydants appropriés, tels que par exemple de l'oxygène, de l'air, du peroxyde d'hydrogène, du nitrate d'ammonium et d'autres nitrates, de telle sorte qu'il se produit une oxydation partielle de la pâte de biomasse.

12. Procédé selon la revendication 10 ou 11, **caractérisé en ce que** des sels et des solides résiduels précipitent et sont rassemblés, les précipitations rassemblées étant évacuées en continu ou périodiquement du procédé avant la gazéification.

13. Procédé selon l'une quelconque des revendications précédentes, **caractérisé en ce qu'**on utilise, dans l'étape de procédé f), un catalyseur pour un réglage plus rapide de la composition souhaitée du gaz produit.

14. Procédé selon la revendication 13, **caractérisé en ce que** le catalyseur contient, comme métal actif, du nickel, du ruthénium ou du rhodium.

15. Procédé selon l'une quelconque des revendications 13 ou 14, **caractérisé en ce que** le réacteur catalytique est de préférence conçu sous forme de réacteur à lit tourbillonnant, de réacteur monolithique, de réacteur à parois ou de réacteur tubulaire, les tubes ou faisceaux tubulaires associés étant revêtus par le catalyseur ou des plaques revêtues de manière catalytique empilées dans un tube étant utilisées.

16. Procédé selon l'une quelconque des revendications précédentes, **caractérisé en ce que** la gazéification catalytique est réalisée dans des conditions surcritiques.
